# EUROPÄISCHE PATENTSCHRIFT

(11) **EP 1 187 287 B1**
(45) Veröffentlichungstag und Bekanntmachung des Hinweises auf die Patenterteilung: **29.10.2003**
(21) Anmeldenummer: 01118194.8
(22) Anmeldetag: 27.07.2001
(51) Int. Cl.: H02G 15/013

(54) **Teilbare Einzelzugabdichtung für Kabel**
Sealing element for cable ducts - divisable
Elément d'étanchéisation pour gaine de câbles, divisible

(30) Priorität: 31.08.2000 DE 10042952
(43) Veröffentlichungstag der Anmeldung: 13.03.2002
(73) Patentinhaber: gabo Systemtechnik GmbH, 94559 Niederwinkling (DE)
(72) Erfinder: Bauer, Peter, 94357 Konzell (DE); Karl, Markus, 94327 Bogen (DE); Lederer, Roland, 93049 Regensburg (DE)

(56) Entgegenhaltungen:
- EP-A- 0 997 678
- DE-U- 29 911 305
- US-A- 3 848 074

## Beschreibung

Die Erfindung bezieht sich auf eine teilbare Einzelzugabdichtung für Kabel oder dergl. mit einem längsgeteilten Gehäuse, einer an der Gehäuseinnenwand vorgesehenen Dichtmatte und mindestens einem Dichtkegel an einer Seite und einem Klemmring an der gegenüberliegenden Seite.

Einzelzugabdichtungen sind an sich bekannt So zeigt beispielsweise der Prospekt "MR" der Firma Wavin GmbH eine solche Einzelzugabdichtung, die aus mehreren in einem zylindrischen Gehäuse konzentrisch angeordneter, vorgestanzter Dichtungsringe besteht, die bei Bedarf einzeln oder insgesamt, je nach Durchmesser des abzudichtenden Kabels, herausgetrennt werden können.

Zum Stand der Technik ist die US-PS 3,848,074 bekannt geworden, die ein Kabelmuffengehäuse für Kabel-Spleißstellen zum Gegenstand hat und mit Durchführungen in verpressbaren zylindrischen Dichtkörpern versehen ist. Ferner die EP 0 997 678, aus der eine Klemmmuffenverbindung für Kabelkanalrohre hervorgeht, die aus zwei Halbschalen besteht und druckdicht ausgeführt ist, wobei eine gegen die Muffeninnenwand verpressbare Dichtmatte das Kabelkanalrohr dicht umschließt. Ein Kabel-Stecker-Durchführsystem für elektronische Bauelemente ist durch das DE GM 299 11 305 U1 offenbart Dabei sind zwei innen profilierte Halbschalen nach Einlegen von elastischen Durchführungen in konische Ausnehmungen dieser Halbschalen mittels Schrauben oder dergl. verbunden und verpresst.

Derartigen Einzelzugabdichtungen haften gewisse Nachteile an. So gestaltet sich das Heraustrennen der einzelnen konzentrisch um einen Stopfen herum gleich hoch, also zylinderförmig, angeordneten, sogen. Zwiebel-Dichtringe, auf Baustellen schwierig. Auch die Abdichtung zwischen Kabelmantel und der Innenwand des Gehäuses ist problematisch. Es kommt häufig vor, daß die Abdichtung in der Kabeldurchführung undicht wird.

Der Erfindung, wie sie in den Ansprüchen beschrieben ist, liegt daher die Aufgabe zugrunde, eine solche Einzelzugabdichtung so auszubilden, daß einerseits zwischen Innenwand des Gehäuses und dem Kabelmantel absolute Dichtheit erzielt wird und andererseits die einzelnen verschiedenen Kabeldurchmessern angepaßten Zwiebel-Dichtringe einfach und sicher durchtrennt werden können.

Die mit der Erfindung erzielbaren Vorteile sind einfache Trennbarkeit und Erkennbarkeit jedes einzelnen Zwiebel-Dichtringes wegen ihrer in der Gesamtheit kegelförmigen, jeweils einzeln in der Höhe abgestuften Ausbildung, sowie absolute Dichtheit, die durch das Anpressen des Gehäuses mit seiner an der Innenwand angeordneten Dichtmatte, die nach Verbringung zweier Klemmringe in ihre Wirkstellung gegen den, bzw, die Zwiebel-Dichtringe und damit diese gegen den Kabelmantel preßt, erzielt wird.

Die Erfindung ist nachstehend anhand eines in den Abbildungen dargestellten Ausführungsbeispieles näher erläutert.

Es zeigt:
- Fig.1: eine Einzelzugabdichtung mit Gehäuse im Schnitt und
- Fig.2: diese Einzelzugabdichtung ohne Gehäuse in perspektivischer Darstellung.

Die teilbare Einzelzugabdichtung besteht im wesentlichen aus einem zweiteiligen Gehäuse 1.1 und 1.2, sowie zwei gegenüberliegend auf dem Gehäuse 1 über der Trennfläche der Gehäuseteile 1.1 und 1.2 angeordnete Verbindungsklammern 2.1 und 2.2, sämtliche vorzugsweise aus einem schlagzähen Kunststoff, ferner einer an der Innenwand dieses Gehäuses vorgesehenen Dichtmatte 4.1 und 4.2, die ein- oder zweiteilig ausgebildet sein kann und einem Dichtkegel 5 mit konzentrisch um seinen Kern 5.5 angeordneten Zwiebel-Dichtringen 5.2, 5.3, 5.4. Schließlich ist noch ein Klemmring 3 am dem Dichtkegel gegenüberliegenden Ende des Gehäuses in eine umlaufende Nut eingesetzt.

Anstelle eines Dichtkegels 5 mit seinem Kern 5.1 können beispielsweise, falls die Kabeldurchmesser bei den vorgegebenen Platzverhältnissen im Gehäuse 1 es gestatten, auch zwei Dichtkegel 5 mit ihren Kernen 5.5 bzw. 5.5 vorgesehen sein.

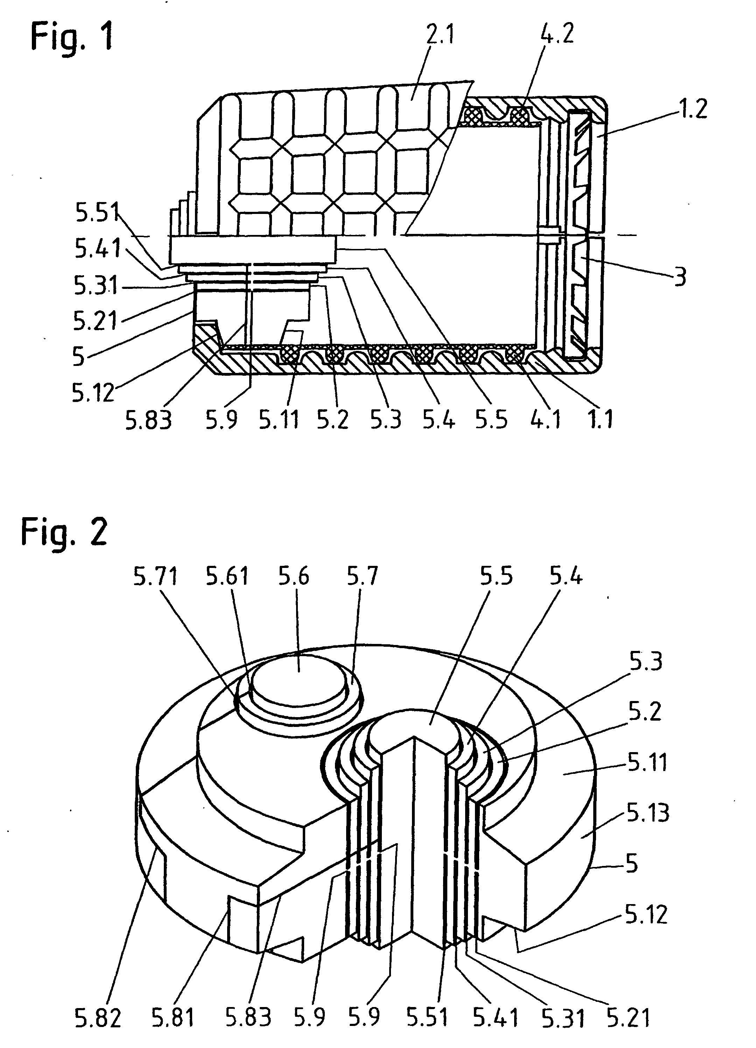

Der Dichtkegel 5 ist in die, wie in der Fig 1 dargestellt, linke Seite des Gehäuses eingesetzt und mit seiner horizontalen Anschlagfläche 5.1 an das Gehäuse gelegt Über die vertikale Anpreßfläche 5.3 wird beim Vertspannen der beiden Gehäuseteile 1.1 und 1.2 durch die Verbindungsklammern 2.1 und 2.2 der Dichtkegel 5 zusammengepresst und dichtet über die jeweiligen Zwiebeldichtringe das nach Entfernen des Dichtkegel-Kernes 5.5 bzw. 5.6 in die so entstandene Durchführung gesteckte (nicht dargestellte) Kabel ab.

Je nach abzudichtenden Kabeldurchmesser sind kein, ein oder mehrere Zwiebel-Dichtringe 5.2, 5.3, 5.4 zu entfernen. Um das Entfernen der Zwiebel-Dichtringe zu erleichtern ist bereits bei der Herstellung des Dichtkegels 5 ein oder mehrere Trennschnitte 5.81, 5.82 vorgesehen, sodaß die einzelnen Zwiebel-Dichtringe 5.2 - 5.7, bzw. Kerne 5.5, 5.6 durch einen einfachen Schnitt (5.21, 5.31, 5.41,5.51, 5.61, 5.71) durch die Verbindungsschicht 5.9 herausgetrennt werden können.

Anstelle von Kabeln, können mit Hilfe der erfindunggemäßen Vorrichtung selbstverständlich auch Rohre, sonstige Profile usw. abgedichtet werden, ohne den Bereich der Erfindung zu verlassen.

### Teilbare Einzelzugabdichtung

### Stückliste

- 1.1: Gehäuse links
- 1.2: Gehäuse rechts

- 2.1: Verbindungsklammer oben
- 2.2: Verbindungsklammer unten

- 3: Klemmring

- 4.1: Dichtmatte links
- 4.2: Dichtmatte rechts

- 5: Dichtkegel
- 5.11: Anschlagfläche
- 5.12: Anschlagfläche
- 5.13: Anpressfläche Dichtkegel

- 5.2: Zwiebel-Dichtring
- 5.21: Schnitt zwischen Zwiebelringen

- 5.3: Zwiebel-Dichtring
- 5.31: Schnitt zwischen Zwiebelringen

- 5.4: Zwiebel-Dichtring
- 5.41: Schnitt zwischen Zwiebelringen

- 5.5: Dichtkegel - Kern A
- 5.51: Schnitt zwischen Zwiebelringen

- 5.6: Dichtkegel - Kern B
- 5.61: Schnitt zwischen Zwiebelringen

- 5.7: Zwiebel-Dichtring
- 5.71: Schnitt zwischen Zwiebelringen

- 5.81: Trennschnitt A } jeweils vom Umfang des Dichtkegels
- 5.82: Trennschnitt B } bis Dichtkegelkern A bzw. B

- 5.9: Verbindungsschicht

## Patentansprüche

1. Teilbare Einzelzugabdichtung für Kabel mit einem längs geteilten Gehäuse (1), einem Verschluß (2.1, 2.2) für das Gehäuse (1), einer an der inneren Gehäusewand vorgesehenen Dichtmatte (4.1, 4.2) und mindestens einem Dichtkegel (5) an einer Seite der Einzelzugabdichtung, **dadurch gekennzeichnet, dass** in dem Gehäuse (1.1;1.2) ein Dichtkegel (5) mit mindestens einer Anschlagfläche (5.11;5.12), mehreren um mindestens einen zur Durchführung eines Kabels entfernbaren Kern (5.5;5.6) in ihrer Höhe abgestuften Zwiebel-Dichtringen (5.2;5.3;5.4;5.7) und einem zum Dichtkegel (5) gegenüberliegenden Ende angebrachten Klemmring (3) vorgesehen ist und zwei über die Dichtmatte (4.1;4.2) und das Gehäuse (1,1;1.2) auf die Anpressfläche (5.13) des Dichtkegels (5) wirkende Verbindungsklammern (2.1;2.2), die den Verschluß bilden vorgesehen sind.

2. Teilbare Einzelzugabdichtung nach Anspruch 1, **gekennzeichnet durch** mehrere nebeneinander angeordnete Dichtkegel (5.5;5.6).

3. Teilbare Einzelzugabdichtung nach Anspruch 1 und 2, **gekennzeichnet durch** eine Verbindungsschicht (5.9) die in der Mitte den Dichtkegel (5), die Zwiebel-Dichtringe (5.2;5.3;5.4;5.7) und den Dichtkegel-Kern (5.5;5.6) verbindet.

4. Teilbare Einzelzugabdichtung nach Anspruch 1 bis 3, **gekennzeichnet durch** Einkerbungen (5.31) am Ende der Verbindungsschicht (5.9) der Zwiebel-Dichtringe (5.2;5.3;5.4;5.7) und des Kerns (5.5).

5. Teilbare Einzelzugabdichtung nach Anspruch 3 und 4, **dadurch gekennzeichnet, daß** entlang eines auf die etwa mittig verlaufende Verbindungsschicht (5.9) abgestimmten vorgefertigten Trennschnittes (5.81;5.82) der jeweils vom Umfang des Dichtkegels (5) bis zu dessen Kern (5.5;5.6) geführt ist, die Zwiebel-Dichtringe (5.2 - 5.7) durchtrennbar sind.

6. Teilbare Einzelzugabdichtung nach Anspruch 5, **dadurch gekennzeichnet, daß** der Trennschnitt (5.81;5.82) abgestuft von dem Außenumfang des Dichtkegels (5) zum dessen Kern (5.5;5.6) geführt ist, wobei der Schnitt in Richtung der Längsachse der Kernes (5.5;5.6) geführt ist und im Bereich der Anpreßfläche des Dichtkegels (5) parallel zur Verbindungsschicht (5.9) der Zwiebel-Dichtringe (5.2 - 5.7) abgestuft verläuft.

## Claims

1. Divisible single-line seal for cables with a longitudinally divided housing (1), a closure (2.1, 2.2) for the housing (1), a sealing mat (4.1, 4.2) provided on the inside wall of the housing and at least one conical seal (5) on one side of the single-line seal, **characterised in that**
one conical seal (5) with at least one stop face (5.11; 5.12), several onion-type sealing rings (5.2; 5.3; 5.4; 5.7) stepped in height around at least one removable core (5.5; 5.6) for leading through a cable and with one clamping ring (3) mounted at the opposite end to the conical seal (5) is provided for in the housing (1.1; 1.2) and two connecting clamps (2.1; 2.2) acting via the sealing mat (4.1, 4.2) and the housing (1.1; 1.2) onto the stop face (5.13) of the conical seal (5) and forming the closure are provided for.

2. Divisible single-line seal in accordance with Claim 1, **characterised by** several conical seals (5.5; 5.6) being located side by side.

3. Divisible single-line seal in accordance with Claims 1 and 2, **characterised by** a connecting layer (5.9) which connects the conical seal (5), the onion-type sealing rings (5.2; 5.3; 5.4; 5.7) and the conical seal core (5.5; 5.6) in the centre.

4. Divisible single-line seal in accordance with Claims 1 to 3, **characterised by** notches (5.31) at the end of the connecting layer (5.9) of the onion-type sealing rings (5.2; 5.3; 5.4; 5.7) and of the core (5.5).

5. Divisible single-line seal in accordance with Claims 3 and 4, **characterised in that** the onion-type sealing rings (5.2 - 5.7) can be divided along a preformed dividing cut (5.81; 5.82) which is aligned to the approximately central connecting layer (5.9) and which leads from the circumference of the conical seal (5) to its core (5.5; 5.6).

6. Divisible single-line seal in accordance with Claim 5, **characterised in that** the dividing cut (5.81; 5.82) runs in steps from the external circumference of the conical seal (5) to its core (5.5; 5.6), with the cut running in steps in the direction of the longitudinal axis of the core (5.5; 5.6) and in the area of the stop face of the conical seal (5) parallel to the connecting layer (5.9) of the onion-type sealing rings (5.2 - 5.7).

## Revendications

1. Elément d'étanchéité à traction simple divisible pour câbles avec un boîtier divisé dans le sens de la longueur (1), un verrou (2.1, 2.2) pour le boîtier (1), une natte d'étanchéité (4.1, 4.2) prévue au niveau de la paroi intérieure du boîtier et au moins une bague bicône (5) sur le côté de l'élément d'étanchéité à traction simple divisible, **caractérisé par le fait que,** dans le boîtier (1.1 ; 1.2), une bague bicône (5) dotée d'au moins une surface d'arrêt (5.11 ; 5.12), de plusieurs bagues d'étanchéité à oignon (5.2 ; 5.3 ; 5.4 ; 5.7) échelonnées en hauteur autour d'au moins un noyau démontable (5.5 ; 5.6) pour laisser passer un câble et d'une bague de serrage (3) appliquée du côté opposé à la bague bicône (5), est prévue, et deux assemblages à crampons (2.1 ; 2.2) agissant, par l'intermédiaire de la natte d'étanchéité (4.1 ; 4.2) et du boîtier (1.1 ; 1.2), sur la surface d'arrêt (5.13) de la bague bicône (5), formant le verrou.

2. Elément d'étanchéité à traction simple divisible selon revendication 1, **caractérisé par** plusieurs bagues bicônes (5.5 ; 5.6) disposées les unes à côté des autres.

3. Elément d'étanchéité à traction simple divisible selon revendications 1 et 2, **caractérisé par** une couche de liaison (5.9) liant au milieu la bague bicône (5), les bagues d'étanchéité à oignon (5.2 ; 5.3 ; 5.4 ; 5.7) et le noyau de la bague bicône (5.5 ; 5.6).

4. Elément d'étanchéité à traction simple divisible selon revendications 1 à 3, **caractérisé par** des rainures (5.31) à l'extrémité de la couche de liaison (5.9), des bagues d'étanchéité à oignon (5.2 ; 5.3 ; 5.4 ; 5.7) et du noyau (5.5).

5. Elément d'étanchéité à traction simple divisible selon revendications 3 et 4, **caractérisé par le fait que** le long d'une jointure (5.81 ; 5.82) préfabriquée conçue le long de la couche de liaison (5.9) située vers le milieu, allant du pourtour de la bague bicône (5) à son noyau (5.5 ; 5.6), les bagues d'étanchéité à oignon (5.2 à 5.7) peuvent être séparées.

6. Elément d'étanchéité à traction simple divisible selon revendication 5, **caractérisé par le fait que** la jointure (5.81 ; 5.82) est échelonnée du pourtour extérieur de la bague bicône (5) au noyau (5.5 ; 5.6), la jointure étant dans le sens de l'axe longitudinal du noyau (5.5 ; 5.6) et parallèle, dans la zone de la surface d'arrêt de la bague bicône (5), à la couche de liaison (5.9) des bagues d'étanchéité à oignon (5.2 - 5.7).
